# EUROPEAN PATENT APPLICATION

(11) **EP 4 567 993 A1**
(43) Date of publication of application: **11.06.2025**
(21) Application number: 24839967.7
(22) Date of filing: 02.07.2024
(51) Int. Cl.: H01M 50/293, H01M 50/591, H01M 50/588, H01M 50/569

(54) **BATTERY PACK**

(30) Priority: 07.07.2023 KR 20230088246
(71) Applicant: LG Energy Solution, Ltd., Seoul 07335 (KR)
(72) Inventor: JANG, Byung Do, Daejeon 34122 (KR)
(74) Representative: Plasseraud IP
(86) International application number: PCT/KR2024/009281
(87) International publication number: WO 2025/014154

(57) **Abstract**

Example embodiments provide a battery pack. The battery pack includes a base plate, a plurality of battery cell assemblies on the base plate, a center beam between the plurality of battery cell assemblies, and a fire-resistant layer applied to the center beam, in which the fire-resistant layer includes a foamable refractory material.

## Description

### [Technical Field]

The present invention relates to a battery pack. The present application claims the benefit of priority based on Korean Patent Application No. 10-2023-0088246, filed on July 7, 2023, and the entire contents of the Korean patent application is incorporated herein by reference.

### [Background Art]

Secondary batteries can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack with improved safety and energy density.

### [Technical Solution]

Example embodiments of the present invention provide a battery pack. The battery pack includes a base plate, a plurality of battery cell assemblies on the base plate, a center beam between the plurality of battery cell assemblies, and a fire-resistant layer applied to the center beam, in which the fire-resistant layer includes a foamable refractory material.

Each of the plurality of battery cell assemblies may include a lead cover assembly, and the lead cover assembly of each of the plurality of battery cell assemblies may overlap the center beam.

Each of the plurality of battery cell assemblies may include a lead cover assembly, and the lead cover assembly may include a lead cover frame, and an integrated circuit mounted on the lead cover frame.

The foamable refractory material may be configured to form a foamed layer, which is an insulating carbonized layer, when a thermal runaway event occurs in the battery pack.

The foamed layer may be porous.

The foamed layer may cover the lead cover assembly of each of the plurality of battery cell assemblies.

The fire-resistant layer may cover an upper surface of the center beam.

The fire-resistant layer may cover an upper surface and side surfaces of the center beam.

Example embodiments provide a battery pack. The battery pack includes a housing with a base plate and a side wall, a plurality of battery cell assemblies on the base plate, a center beam between the plurality of battery cell assemblies, a lid plate coupled to the side wall, and a fire-resistant layer applied to the lid plate, in which the fire-resistant layer includes a foamable refractory material.

The fire-resistant layer may overlap the center beam.

The foamable refractory material may be configured to form a foamed layer, which is an insulating carbonized layer, when a thermal runaway event occurs in the battery pack.

Each of the plurality of battery cell assemblies may include a lead cover assembly, and the lead cover assembly may include a lead cover frame, and an integrated circuit mounted on the lead cover frame.

The foamed layer may cover the lead cover assembly of each of the plurality of battery cell assemblies.

### [Advantageous Effects]

A battery pack according to example embodiments of the present invention includes a fire-resistant layer including a foamable refractory material applied to a center beam or a lid plate. Therefore, the propagation of a thermal runaway event between adjacent battery cell assemblies can be prevented, and the safety of the battery pack can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a top view of a battery pack according to example embodiments.
FIG. 2 is a cross-sectional view taken along line II-II' of FIG. 1 according to example embodiments.
FIG. 3 is a cross-sectional view for describing an effect of a battery pack according to example embodiments.
FIG. 4 is a cross-sectional view of a battery pack according to other example embodiments.
FIG. 5 is a cross-sectional view of a battery pack according to other example embodiments.
FIG. 6 is a cross-sectional view of a battery pack according to other example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

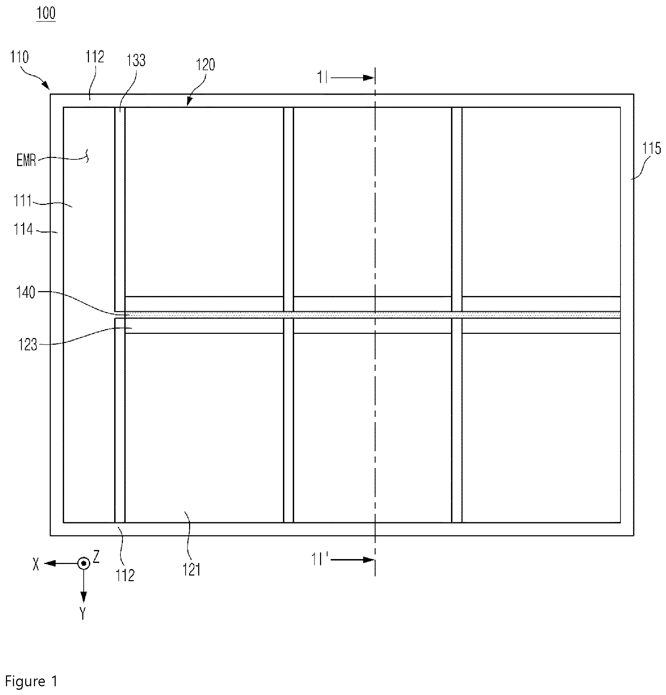

FIG. 1 illustrates a battery pack 100 according to example embodiments. In FIG. 1, a lid plate 150 is omitted.

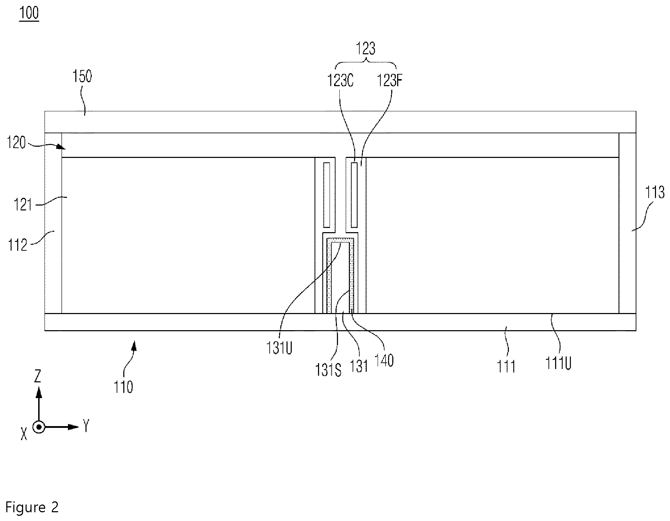

FIG. 2 is a cross-sectional view taken along line 1I-1I' of FIG. 1.

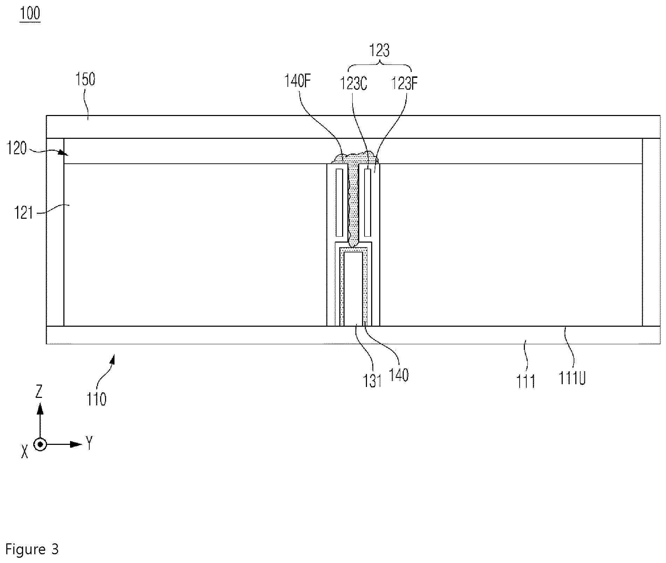

FIG. 3 is a cross-sectional view for describing an effect of the battery pack 100 according to example embodiments. More specifically, FIG. 3 is a drawing corresponding to FIG. 2 and illustrates the battery pack 100 when a thermal runaway event occurs.

Referring to FIGS. 1 to 3, the battery pack 100 may include a housing 110, a plurality of battery cell assemblies 120, a center beam 131, cross beams 133, a fire-resistant layer 140, and a lid plate 150.

The housing 110 may provide a space for mounting the plurality of battery cell assemblies 120 therein. The housing 110 may include a base plate 111 and side walls 112, 113, 114, and 115.

Two directions substantially parallel to an upper surface 111U of the base plate 111 are defined as an X-axis direction and a Y-axis direction, and a direction substantially perpendicular to the upper surface 111U of the base plate 111 is defined as a Z-axis direction. The X-axis direction, the Y-axis direction, and the Z-axis direction may be substantially perpendicular to one another. Unless otherwise mentioned, the definition of directions will apply to the following drawings.

The base plate 111 may include a plurality of plates that are friction-stir welded to each other. The base plate 111 may include a plurality of cooling channels, a plurality of cavities, and a rib. Each of the cooling channels, the cavities, and the rib may extend in the X-axis direction. The cooling channels may provide a path for a cooling fluid to flow. The cooling channels may be spaced apart from each other in the Y-axis direction. The cooling channels may be arranged in the Y-axis direction. The plurality of cavities are empty spaces formed in the base plate 111. By forming the plurality of cavities, the mass of the base plate 111 may be reduced, thus improving the energy density of the battery pack 100. The rib may define the plurality of cooling channels and the plurality of cavities. The rib may surround the plurality of cooling channels and the plurality of cavities. The airtightness of the plurality of cooling channels and the plurality of cavities may be maintained due to the rib.

The side walls 112, 113, 114, and 115 may be coupled to the base plate 111. The side walls 112, 113, 114, and 115 may be coupled to the base plate 111 by, for example, friction stir welding.

The side walls 112 and 113 may be substantially perpendicular to the X-axis direction. The side walls 112 and 113 may be spaced apart from each other in the X-axis direction. The side walls 114 and 115 may be substantially perpendicular to the Y-axis direction. The side walls 114 and 115 may be spaced apart from each other in the Y-axis direction.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

For example, the battery pack 100 may be a moduleless type battery pack, and each of the plurality of battery cell assemblies 120 may not include a module frame. As another example, the battery pack 100 may be a module type battery pack, and each of the plurality of battery cell assemblies 120 may not include a module frame.

Each of the plurality of battery cell assemblies 120 may include a cell stack 121 and a lead cover assembly 123. The lead cover assembly 123 may be coupled to the cell stack 121.

Each of the cell stacks 121 may include a plurality of banks connected to each other in series. Each of the plurality of banks may include one or more battery cells connected in parallel. The number of banks connected in series and the number of battery cells connected in parallel may be determined according to a voltage and a current to be output from the cell stack 121.

The plurality of battery cells are basic units of a lithium ion battery, i.e., a secondary battery. Each of the plurality of battery cells includes an electrode assembly, an electrolyte, a case, and electrode leads. Each of the plurality of battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween that are stacked sequentially.

The electrode lead may be coupled to one of positive electrode tabs of the plurality of positive electrodes and negative electrode tabs of a plurality of negative electrodes. The electrode lead may be welded to one of the positive electrode tabs and the negative electrode tabs. The electrode lead may be an external connection terminal of each of the plurality of battery cells.

The lead cover assembly 123 may include a lead cover frame 123F and an integrated circuit 123C. The lead cover frame 123F may include, for example, an insulating material such as plastic. The lead cover frame 123F may cover the electrode leads of the cell stack 121. Accordingly, the lead cover frame 123F may prevent undesired short circuit between the electrode leads of the cell stack 121 and an external element. An example of undesired short circuit between the electrode leads of the cell stack 121 and an external element includes short circuit between electrode leads of adjacent battery cell assemblies 120.

The integrated circuit 123C may be mounted on the lead cover frame 123F. The integrated circuit 127C may be fixed to the lead cover frame 123F by, for example, thermal fusion or the like. The integrated circuit 123C may be configured to detect voltages of the electrode leads of the cell stack 121. The integrated circuit 123C may include a sensing plate or conductive wire in contact with the electrode leads of the cell stack 121. The integrated circuit 123C may include temperature sensors.

The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. Those of ordinary skill in the art will be able to easily derive a plurality of battery cell assemblies 120 arranged in an MxN array (here, M and N are each an integer of 2 or more), based on the above description.

The center beam 131 may be on the base plate 111. The center beam 131 may extend in the X-axis direction. The center beam 131 may be coupled to the base plate 111. The center beam 131 may be welded to the base plate 111. Alternatively, the center beam may be formed together with the base plate 111 by an extrusion process and may be included in the base plate 111 in this case.

The center beam 131 may be interposed between the plurality of battery cell assemblies 120. The center beam 131 may isolate the plurality of battery cell assemblies 120 in the Y-axis direction. The plurality of battery cell assemblies 120 may be spaced apart from each other in the Y-axis direction with the center beam 131 interposed therebetween.

The cross beams 133 may be on the base plate 111. The cross beams 133 may extend in the Y-axis direction. The cross beams 133 may be coupled to the base plate 111. The cross beams 133 may be welded to the base plate 111. In some cases, the cross beams 133 may be included in the battery cell assemblies 120. In this case, the battery cell assemblies 120 may be referred to as having a beam-integrated structure.

The cross beams 133 may be interposed between the plurality of battery cell assemblies 120 or may isolate an electronic component mounting region EMR from the plurality of battery cell assemblies 120. The cross beams 133 may isolate the plurality of battery cell assemblies 120 in the X-axis direction. The plurality of battery cell assemblies 120 may be spaced apart from each other in the X-axis direction with the cross beams 133 interposed therebetween.

An arrangement of the center beam 131, the cross beams 133, and the plurality of battery cell assemblies 120 illustrated in FIG. 1 is a non-limiting example and thus should not be understood as limiting the technical idea of the present invention in any sense. A battery pack that includes various numbers and arrangements of a center beam, cross-beams, and battery cell assemblies will be easily derived by those of ordinary skill in the art according to the above description.

The center beam 131 may be coated with the fire-resistant layer 140. The fire-resistant layer 140 may cover side surfaces 131S of the center beam 131. The fire-resistant layer 140 may cover an upper surface 131U of the center beam 131.

The fire-resistant layer 140 may include a foamable refractory material. Here, the foamable refractory material may be configured to have a foaming effect when heated. The foaming process may include melting of a surface-coated layer, bubbling, swelling, generation of an insulating layer, and generation of a ceramic layer. The fire-resistant layer 140 may be provided by a method such as painting, coating or spraying.

When a thermal runaway event occurs inside the battery pack 100, the fire-resistant layer 140 may be configured to form a foamed layer 140F as shown in FIG. 3. The volume of the foamed layer 140F may be larger than that of the fire-resistant layer 140. A space between a frame 220 and the battery pack 100 may be filled with the foamed layer 140F. The foamed layer 140F may be an insulating carbonized layer. The foamed layer 140F may be porous. The foamed layer 140F may have a high ignition point, a high melting point, and low thermal conductivity. Accordingly, a fire occurring in one of the battery cell assemblies 120 may be prevented from propagating to neighboring battery cell assemblies 120 due to the foamed layer 140F.

The lead cover frame 123F includes an integrated circuit accommodation part for accommodation of the integrated circuit 123C and thus thickness of an upper part of the lead cover frame 123F may be greater than thickness of a lower part of the lead cover frame 123F. Accordingly, the center beam 131 isolates only lower parts of the battery cell assemblies 120, and upper parts of the battery cell assemblies 120 may face each other without being isolated.

Here, upper and lower parts of an element may be defined with respect to the upper surface 111U of the base plate 111. For example, the upper part of the element may be farther from the upper surface 111U of the base plate 111 than the lower part thereof.

When a thermal runaway event occurs in the plurality of battery cell assemblies 120, a space between the battery cell assemblies 120 that are not covered with the center beam 131 may be filled with the foamed layer 140F. Accordingly, physical, thermal, and electrical isolation between the battery cell assemblies 120 may be provided, and the safety of the battery pack 100 may be improved.

Here, the thermal runaway state of the plurality of battery cell assemblies 120 is a state in which a change of temperature of the plurality of battery cell assemblies 120 accelerates the change of temperature, i.e., an uncontrollable positive feedback. The temperature of the plurality of battery cell assemblies 120 that are in a thermal runaway state sharply increase, and a large amount of high-pressure gas and combustion debris are discharged.

The lid plate 150 may be coupled to the side walls 112, 113, 114 and 115. The lid plate 150 may cover elements, such as the battery cell assemblies 120 and electronic components, inside the battery pack 100. The lid plate 150 may be fixed to the side walls 112, 113, 114, and 115 by mechanical coupling means such as a fastening member.

The battery pack 100 may further include exhaust devices. The exhaust devices may be coupled to, for example, the side wall 112. The side wall 112 may include exhaust holes, and the exhaust devices may be coupled to the exhaust holes of the side wall 112. Each of the exhaust devices may include a spring type or rupture disk. Each of the exhaust devices may be configured to emit a gas from the inside of the battery pack 100 when internal pressure of the battery pack 100 exceeds a threshold.

The exhaust devices may be configured to delay thermal propagation by discharging a high-temperature gas from the inside of the battery pack 100 to the outside when at least one of the plurality of battery cell assemblies 120 is in a thermal runaway state.

The battery pack 100 may further include electronic components. The electronic components may be on the electronic component mounting region EMR of the housing 110. The electronic components may include an electronic device required to drive the battery pack 100.

The electronic components may include, for example, a battery management system (BMS). The BMS may be configured to monitor, balance, and control the battery pack 100. Monitoring of the battery pack 100 may include measuring voltages and currents of certain nodes inside the plurality of battery cell assemblies 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and an external load (e.g., a motor of a vehicle), when abnormal voltage such as voltage surges occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

### (Second Embodiment)

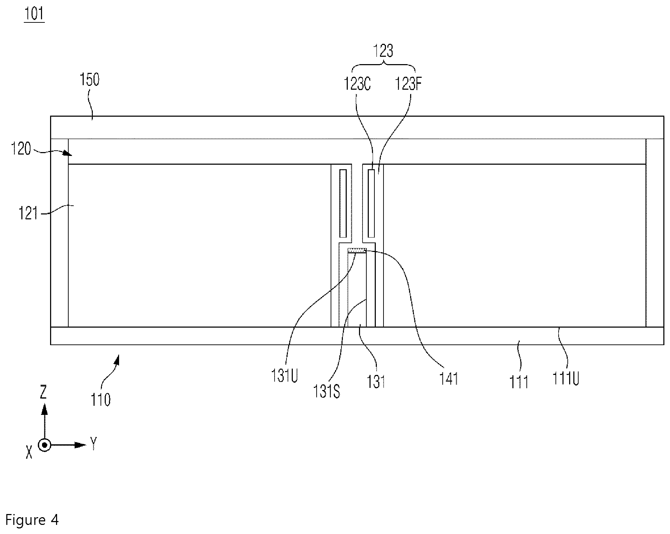

FIG. 4 is a diagram for describing a battery pack 101 according to other example embodiments.

Referring to FIG. 4, the battery pack 101 may include a housing 110, a plurality of battery cell assemblies 120, a center beam 131, cross beams 133 (see FIG. 1), a fire-resistant layer 141, and a lid plate 150.

The housing 110, the plurality of battery cell assemblies 120, the center beam 131, the cross beams 133 (see FIG. 1), and the lid plate 150 are substantially the same as those described above with reference to FIGS. 1 to 3 and thus a redundant descriptions thereof is omitted here.

The center beam 131 may be coated with the fire-resistant layer 141. The fire-resistant layer 141 may include a foamable refractory material. Accordingly, the fire-resistant layer 141 may be configured to form the foamed layer 140F (see FIG. 3) when a thermal runaway event occurs inside the battery pack 101.

The fire-resistant layer 141 may cover an upper surface 131U of the center beam 131. The fire-resistant layer 141 may cover only the upper surface 131U of the center beam 131. The fire-resistant layer 141 may not cover side surfaces 131S of the center beam 131. The fire-resistant layer 141 may be spaced apart from the side surfaces 131S of the center beam 131.

According to example embodiments, because the fire-resistant layer 141 is partially applied only to the upper surface 131U of the center beam 131, manufacturing costs of the battery pack 101 may decrease and energy density of the battery pack 101 may improve.

### (Third Embodiment)

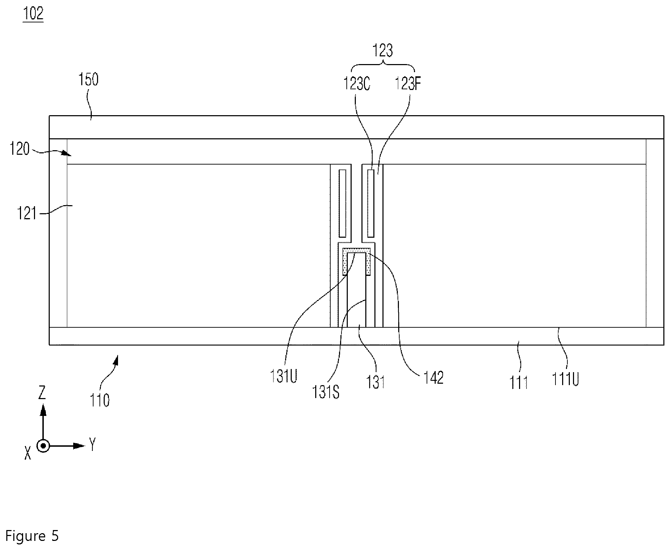

FIG. 5 is a diagram for describing a battery pack 102 according to other example embodiments.

Referring to FIG. 5, the battery pack 102 may include a housing 110, a plurality of battery cell assemblies 120, a center beam 131, cross beams 133 (see FIG. 1), a fire-resistant layer 142, and a lid plate 150.

The housing 110, the plurality of battery cell assemblies 120, the center beam 131, the cross beams 133 (see FIG. 1), and the lid plate 150 are substantially the same as those described above with reference to FIGS. 1 to 3 and thus a redundant descriptions thereof is omitted here.

The center beam 131 may be coated with the fire-resistant layer 142. The fire-resistant layer 142 may include a foamable refractory material. Accordingly, the fire-resistant layer 142 may be configured to form the foamed layer 140F (see FIG. 3) when a thermal runaway event occurs inside the battery pack 102.

The fire-resistant layer 142 may cover an upper surface 131U of the center beam 131. The fire-resistant layer 142 may partially cover side surfaces 131S of the center beam 131. A portion of the fire-resistant layer 142 covering the side surfaces 131S of the center beam 131 may be formed due to the flow of the fire-resistant layer 142 after coating and curing of the fire-resistant layer 142.

According to example embodiments, the fire-resistant layer 142 partially covers the center beam 131, and thus, manufacturing costs of the battery pack 102 may decrease and energy density of the battery pack 102 may improve.

### (Fourth Embodiment)

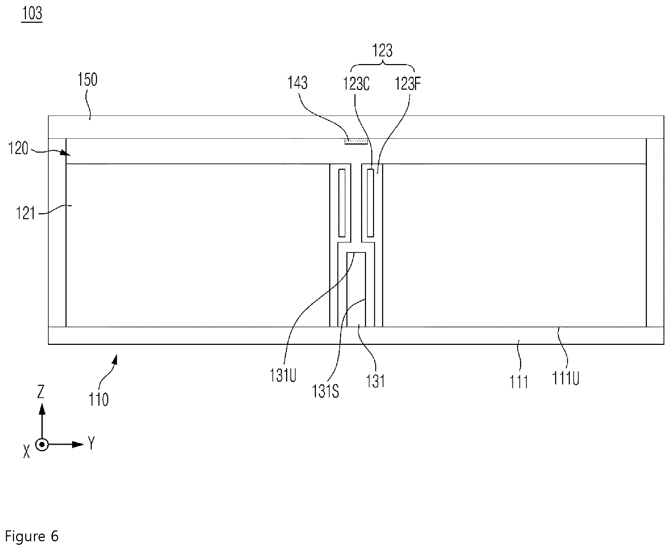

FIG. 6 is a diagram for describing a battery pack 103 according to other example embodiments.

Referring to FIG. 6, the battery pack 103 may include a housing 110, a plurality of battery cell assemblies 120, a center beam 131, cross beams 133 (see FIG. 1), a fire-resistant layer 143, and a lid plate 150.

The housing 110, the plurality of battery cell assemblies 120, the center beam 131, the cross beams 133 (see FIG. 1), and the lid plate 150 are substantially the same as those described above with reference to FIGS. 1 to 3 and thus a redundant descriptions thereof is omitted here.

The lid plate 150 may be coated with the fire-resistant layer 143. The fire-resistant layer 143 may partially cover the lid plate 150. The fire-resistant layer 143 may include a foamable refractory material. Accordingly, the fire-resistant layer 143 may be configured to form the foamed layer 140F (see FIG. 3) when a thermal runaway event occurs inside the battery pack 103. The fire-resistant layer 143 may overlap the center beam 131 in the Z-axis direction. The fire-resistant layer 143 may overlap the lead cover assembly 123 of each of the plurality of battery cell assemblies 120 in the Z-axis direction.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a base plate;
a plurality of battery cell assemblies on the base plate;
a center beam between the plurality of battery cell assemblies; and
a fire-resistant layer applied to the center beam,
wherein the fire-resistant layer comprises a foamable refractory material.

2. The battery pack of claim 1, wherein each of the plurality of battery cell assemblies comprises a lead cover assembly, and
the lead cover assembly of each of the plurality of battery cell assemblies overlaps the center beam.

3. The battery pack of claim 1, wherein each of the plurality of battery cell assemblies comprises a lead cover assembly,
wherein the lead cover assembly comprises:
a lead cover frame; and
an integrated circuit mounted on the lead cover frame.

4. The battery pack of claim 3, wherein the foamable refractory material is configured to form a foamed layer when a thermal runaway event occurs in the battery pack, the foamed layer being an insulating carbonized layer.

5. The battery pack of claim 4, wherein the foamed layer is porous.

6. The battery pack of claim 4, wherein the foamed layer covers the lead cover assembly of each of the plurality of battery cell assemblies.

7. The battery pack of claim 1, wherein the fire-resistant layer covers an upper surface of the center beam.

8. The battery pack of claim 1, wherein the fire-resistant layer covers an upper surface and side surfaces of the center beam.

9. A battery pack comprising:
a housing with a base plate and a side wall;
a plurality of battery cell assemblies on the base plate;
a center beam between the plurality of battery cell assemblies;
a lid plate coupled to the side wall; and
a fire-resistant layer applied to the lid plate,
wherein the fire-resistant layer comprises a foamable refractory material.

10. The battery pack of claim 9, wherein the fire-resistant layer overlaps the center beam.

11. The battery pack of claim 9, wherein the foamable refractory material is configured to form a foamed layer when a thermal runaway event occurs in the battery pack, the foamed layer being an insulating carbonized layer.

12. The battery pack of claim 11, wherein each of the plurality of battery cell assemblies comprises a lead cover assembly, and
wherein the lead cover assembly comprises:
a lead cover frame; and
an integrated circuit mounted on the lead cover frame.

13. The battery pack of claim 12, wherein the foamed layer covers the lead cover assembly of each of the plurality of battery cell assemblies.
